Europäisches Patentamt

European Patent Office

Office européen des brevets

(11) Numéro de publication : **0 443 917 A1**

# (12) DEMANDE DE BREVET EUROPEEN

(21) Numéro de dépôt : **91400378.5**

(51) Int. Cl.⁵ : **H02J 9/06**

(22) Date de dépôt : **14.02.91**

(30) Priorité : **19.02.90 FR 9001957**

(43) Date de publication de la demande :
**28.08.91 Bulletin 91/35**

(84) Etats contractants désignés :
**AT BE CH DE DK ES FR GB GR IT LI LU NL SE**

(71) Demandeur : **SERRAS-PAULET, Edouard**
**38bis Boulevard d'Argenson**
**F-92200 Neuilly Sur Seine (FR)**

(72) Inventeur : **SERRAS-PAULET, Edouard**
**38bis Boulevard d'Argenson**
**F-92200 Neuilly Sur Seine (FR)**

(74) Mandataire : **Ramey, Daniel et al**
**Cabinet Ores 6 Avenue de Messine**
**F-75008 Paris (FR)**

(54) **Procédé et dispositif d'alimentation et de protection d'un appareil électronique, en particulier d'un appareil informatique.**

(57)    Dispositif d'alimentation et de protection d'un appareil électronique en particulier d'un appareil informatique, comprenant un transformateur (T1) dont un enroulement secondaire (14) reçoit la tension (Ve) délivrée par le réseau et dont un enroulement secondaire (34) est connecté à un onduleur (44) piloté par une tension synchrone et en phase avec celle du réseau, une batterie (42) associée à l'onduleur étant reliée par un amplificateur (40) au point milieu (36) de l'enroulement secondaire (34) pour fournir à cet onduleur une tension alternative redressée et synchrone et en phase avec celle du réseau de telle sorte que l'onduleur ne puisse fournir de courant qu'en l'absence de la tension (Ve) du réseau.

EP 0 443 917 A1

FIG.1

# PROCEDE ET DISPOSITIF D'ALIMENTATION ET DE PROTECTION D'UN APPAREIL ELECTRONIQUE, EN PARTICULIER D'UN APPAREIL INFORMATIQUE

L'invention concerne un procédé et un dispositif d'alimentation et de protection d'un appareil électronique, notamment d'un appareil informatique.

On sait qu'il est en général nécessaire d'intercaler un dispositif d'alimentation à sortie de tension alternative régulée entre le réseau de distribution d'énergie électrique et des systèmes tels que des matériels informatiques et/ou des appareils d'acquisition et de traitement de signaux faibles pour éviter que le fonctionnement de ces matériels ou appareils soit perturbé par les imperfections du réseau, notamment les variations de tension et/ou les coupures plus ou moins longues. Ces dispositifs d'alimentation doivent répondre aux conditions suivantes :

- ils ne doivent pas générer de perturbations rayonnées ou conduites,
- ils doivent assurer une certaine stabilisation de la tension alternative délivrée,
- ils doivent pouvoir faire face à des coupures du réseau, notamment les micro-coupures (qui sont relativement fréquentes) et les coupures plus longues, ayant une durée de quelques minutes ou davantage,
- ils doivent avoir un bon rendement,
- ils doivent permettre d'assurer, le cas échéant, l'isolement galvanique par rapport au réseau.

Les Brevets Français 86 01623 et 86 05345 du demandeur décrivent un dispositif qui répond parfaitement à ces conditions.

Pour l'essentiel, ce dispositif connu comprend un redresseur relié d'une part au réseau de distribution et d'autre part à un amplificateur onduleur dont une entrée de commande est reliée à un moyen générateur d'une tension ondulée synchrone et en phase avec la tension du réseau de distribution. Deux transformateurs assurent la liaison entre le redresseur et le réseau de distribution, et entre l'amplificateur onduleur et l'appareil à alimenter. Une batterie, telle qu'un accumulateur électrochimique, fournit à l'amplificateur onduleur l'énergie nécessaire en cas de coupure du réseau. Un circuit de charge de cette batterie est avantageusement prévu à la sortie de l'onduleur.

La présente invention a essentiellement pour but de simplifier ce dispositif décrit dans les brevets antérieurs du demandeur, de diminuer son poids et son coût, et d'augmenter son rendement et sa fiabilité.

Elle propose à cet effet un procédé d'alimentation et de protection d'un appareil électronique, en particulier d'un appareil informatique, au moyen d'un onduleur relié à un réseau de distribution électrique et à l'appareil pour lui fournir en cas de besoin une tension alternative régulée, caractérisé en ce qu'il consiste à connecter l'onduleur en parallèle sur le réseau et sur l'appareil par l'intermédiaire d'un transformateur, à alimenter l'onduleur par une tension qui est la somme d'une première tension alternative fournie par le transformateur à partir de la tension du réseau et d'une seconde tension ondulée redressée qui est synchrone et en phase avec la tension du réseau et qui est fournie à partir d'une batterie associée à l'onduleur, les arches de sinusoïde de ces deux tensions ayant des amplitudes sensiblement égales en valeur absolue, et à piloter l'onduleur par une tension synchrone et en phase avec celle du réseau, de telle sorte qu'il ne fournit du courant qu'en l'absence de ladite première tension alternative.

Un premier avantage important de l'invention est que l'onduleur est connecté en parallèle sur le réseau de distribution et sur l'appareil à alimenter, et n'intervient donc qu'en cas de coupures ou de perturbations du réseau, alors que les dispositifs de la technique antérieure sont connectés en série entre le réseau et l'appareil à alimenter. Il en résulte que cet appareil peut, au démarrage, recevoir des courants de crête élevés qui sont fournis par le réseau de distribution et qui ne sont pas limités par le dispositif d'alimentation et de protection. Par ailleurs, comme l'onduleur ne fournit aucun courant en cas de fonctionnement normal du réseau de distribution, sa consommation est sensiblement nulle dans ces conditions.

De plus, toute coupure ou perturbation du réseau de distribution est automatiquement et immédiatement compensée par l'onduleur alimenté par la batterie, sans aucun délai, puisqu'il n'y a aucune commutation onduleur-réseau de distribution.

Enfin, un seul transformateur permet d'assurer la liaison entre le réseau, l'onduleur et l'appareil à alimenter. La suppression d'un transformateur par rapport aux dispositifs équivalents de la technique antérieure se traduit par un gain de poids, d'encombrement et de coût important.

Selon une autre caractéristique de l'invention, le procédé consiste également à comparer la tension du réseau à deux tensions alternatives correspondant à des limites supérieure et inférieure acceptables de cette tension, et à couper l'alimentation de l'appareil par le réseau dès que la tension fournie par ce dernier atteint l'une des limites précitées.

En effet, la tension du réseau varie en général dans des limites qui sont acceptables par l'appareil et qui rendent inutiles une alimentation de cet appareil par l'onduleur.

Avantageusement, quand la tension du réseau est comprise entre lesdites limites, le procédé consiste également à réguler cette tension en réduisant ses variations par rapport à une valeur nominale, par commutation d'enroulements primaires additionnels sur le transformateur.

On peut ainsi par exemple, quand la tension du réseau varie de ± 15% par rapport à une valeur nominale, alimenter l'appareil par une tension qui ne varie que de ± 5% au maximum par rapport à cette valeur nominale, et cela sans passer par l'onduleur.

L'invention propose également un dispositif d'alimentation et de protection d'un appareil électrique, tel qu'un appareil informatique, le dispositif comprenant un onduleur connecté à un réseau de distribution d'énergie électrique et à l'appareil, ainsi qu'une batterie du type accumulateur électrochimique par exemple, caractérisé en ce que l'onduleur est connecté en parallèle sur le réseau et sur l'appareil par l'intermédiaire d'un transformateur dont au moins un enroulement primaire est relie au réseau et un enroulement secondaire est relié à l'onduleur, des moyens de commande étant prévus pour piloter l'onduleur par une tension ondulée synchrone et en phase avec la tension du réseau et pour l'alimenter par la somme d'une première tension alternative fournie par ledit enroulement secondaire du transformateur à partir de la tension du réseau et d'une seconde tension alternative redressée qui est fournie à partir de la batterie et qui est synchrone et en phase avec la tension du réseau, les amplitudes de ces deux tensions étant sensiblement égales en valeur absolue, de telle sorte que l'onduleur ne fournit du courant qu'en l'absence de ladite première tension alternative.

Dans un mode de réalisation préféré de l'invention, l'onduleur comprend un étage de puissance à transistors du type "push-pull" et ladite seconde tension alternative redressée est appliquée en un point milieu de l'enroulement secondaire du transformateur.

La batterie est raccordée au point milieu de l'enroulement secondaire du transformateur par un amplificateur piloté par une tension alternative redressée synchrone et en phase avec celle du réseau, pour fournir ladite seconde tension alternative redressée.

Un élément à conduction unidirectionnelle tel qu'une diode peut être prévu entre cet amplificateur et le point milieu de l'enroulement secondaire.

Selon d'autres caractéristiques de l'invention, l'enroulement primaire du transformateur comprend des enroulements additionnels connectables en série au moyen d'un commutateur commandé par comparaison de la tension du réseau à des valeurs prédéterminées.

Avantageusement, le transformateur précité est un auto-transformateur et l'appareil et le réseau sont connectés aux bornes de l'enroulement primaire précité de ce transformateur.

L'invention sera mieux comprise et d'autres caractéristiques, détails et avantages de celle-ci apparaitront plus clairement à la lecture de la description qui suit, faite à titre d'exemple en référence aux dessins annexés, dans lesquels :

la figure 1 représente schématiquement un dispositif d'alimentation et de protection selon l'invention ;

les figures 2, 3, 4 et 5 sont des graphes représentant en fonction du temps les tensions d'alimentation et de commande de l'onduleur faisant partie de ce dispositif ;

- la figure 6 représente schématiquement une variante de réalisation du dispositif.

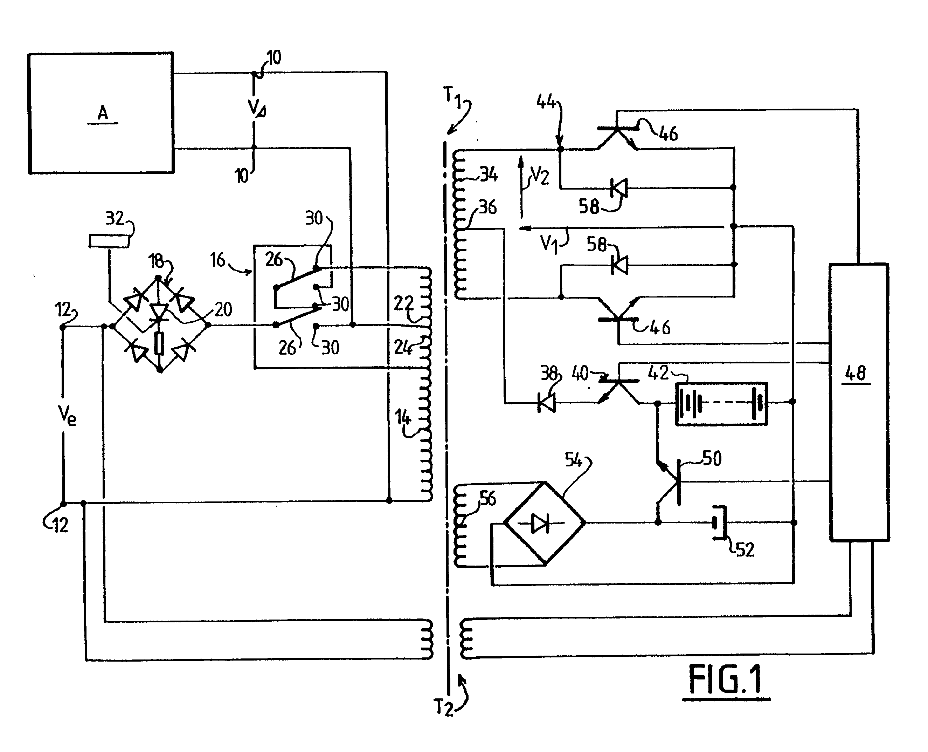

On a représenté schématiquement en figure 1 un dispositif selon l'invention pour l'alimentation et la protection d'un appareil électrique ou électronique A, tel qu'un micro-ordinateur par exemple, qui est destiné à être connecté aux bornes 10 du dispositif pour être alimenté par une tension alternative Vs. Le dispositif selon l'invention est raccordé au réseau de distribution électrique par des bornes 12, pour recevoir entre ces bornes la tension alternative Ve délivrée par le réseau.

Le dispositif selon l'invention comprend un transformateur T1 dont un enroulement primaire 14 est connecté entre les bornes 12, par l'intermédiaire d'un commutateur commandé 16 et d'un pont de diodes 18 dont la diagonale comprend un transistor ou thyristor 20.

Le commutateur 16 permet de connecter en série à l'enroulement primaire 14 des enroulements primaires additionnels 22 et 24 et comprend à cet effet deux contacts mobiles 26 déplaçables entre des plots 30 reliés aux bornes des enroulements additionnels 22 et 24.

Dans l'exemple de réalisation représenté, le transformateur T1 est un auto-transformateur et les bornes 10 de liaison à l'appareil électrique ou électronique sont raccordées directement aux bornes de l'enroulement primaire 14. Les nombres de spires des enroulements additionnels 22 et 24 sont choisis pour que la tension Vs fournie à l'appareil varie de ± 5% au maximum par rapport à une valeur nominale quand la tension Ve varie de ± 15% au maximum par rapport à cette valeur nominale. Le circuit de commande du commutateur 16 est à la portée de l'homme du métier, ainsi que la commande 32 du transistor ou thyristor 20, qui est conducteur tant que la tension du réseau Ve varie entre des limites prédéterminées, et qui est bloqué quand cette tension varie en dehors de ces limites.

Le transformateur T1 comprend un enroulement secondaire 34 à point milieu 36 auquel est relié, par l'intermédiaire d'une diode 38 de protection, un amplificateur 40 représenté symboliquement sous forme d'un transistor fonctionnant en régime linéaire, qui est lui-même relié à une source de tension continue constituée par une batterie ou un accumulateur électrochimique 42.

L'onduleur 44 faisant partie du dispositif selon l'invention est ici constitué par un étage de puissance du type "push-pull" à deux transistors 46 fonctionnant en linéaire. Les collecteurs de ces transistors sont reliés aux bornes de l'enroulement secondaire 34 du transformateur, tandis que leurs émetteurs sont raccordés entre eux et à un pôle de la batterie 42, opposé au pôle relié au collecteur du transistor 40.

Les bases des transistors 40 et 46 sont reliées à des circuits de pilotage montés sur une carte de commande 48 qui comporte également un circuit de pilotage d'un transistor 50 faisant partie, avec un condensateur électrochimique 52 et un pont de diodes 54, d'un circuit de charge de la batterie 42, alimenté par un enroulement secondaire 56 du transformateur T1.

Le dispositif comprend encore un petit transformateur T2 (de quelques volt-ampères) dont l'enroulement primaire est connecté entre les bornes 12 pour recevoir la tension Ve et dont l'enroulement secondaire est connecté à deux bornes de la carte de commande 48, pour fournir à celle-ci une tension alternative qui est l'image fidèle de la tension Ve du réseau.

On notera enfin la présence de deux diodes 58 qui sont montées en parallèle sur les transistors 46 et qui constituent avec l'enroulement 34 à point milieu 36 un redresseur double alternance. Les diodes 58 ont également pour rôle de protéger les transistors 46 contre des surtensions inverses.

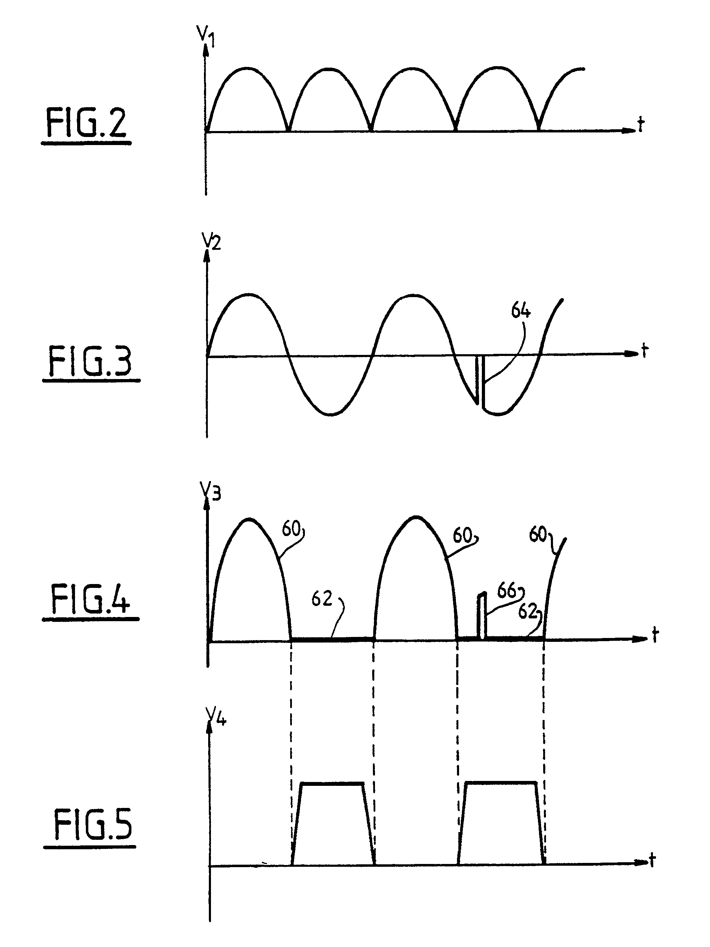

Le fonctionnement de ce dispositif va être maintenant expliqué en référence aux figures 2, 3, 4 et 5, qui sont des graphes représentant respectivement, en fonction du temps, la tension fournie par l'amplificateur 40, la tension fournie par l'enroulement secondaire 34 du transformateur T1, la tension collecteur-émetteur d'un transistor 46 de l'onduleur, et la tension de base de ce transistor.

L'amplificateur 40 alimenté par la batterie 42 est piloté par une tension alternative redressée fournie par la carte de commande 48, et délivre la tension V1 redressée représentée en figure 2 et qui est synchrone et en phase avec la tension Ve délivrée par le réseau.

La tension V2 fournie par l'enroulement secondaire 34 du transformateur, c'est à dire la tension appliquée au collecteur d'un transistor 46 de l'onduleur 44, est également synchrone et en phase avec la tension Ve délivrée par le réseau. De plus, les amplitudes des tensions V1 et V2 sont déterminées pour être égales en valeur absolue.

La tension V3 représentée en figure 4 est la tension collecteur-émetteur d'un transistor 46 de l'onduleur, et est constituée par la somme des tensions V1 et V2. Etant donné l'égalité des amplitudes en valeur absolue des tensions V1 et V2, la tension V3 est constituée d'une succession d'arches de sinusoïde 60 ayant une amplitude égale à deux fois l'amplitude des tensions V1 et V2, et qui sont reliées entre elles par des paliers 62 de tension nulle.

Le transistor 46 de l'onduleur 44 est par ailleurs piloté par une tension V4 redressée fournie par la carte de commande 48, et qui est synchrone et en phase avec la tension Ve délivrée par le réseau. Les circuits de pilotage des transistors 40, 46 et 50 sont à la portée de l'homme du métier et ont d'ailleurs été décrits dans les brevets français antérieurs précités du demandeur.

On voit que, en présence d'une tension Ve fournie par le réseau et comprise entre des valeurs limites prédéterminées, la tension V3 collecteur-émetteur d'un transistor 46 de l'onduleur 44 polarise ce transistor par une arche de sinusoïde 60, pendant laquelle la tension V4 est nulle, puis par un palier 62 de tension nulle, de telle sorte que ce transistor, piloté par la tension V4, ne laisse passer aucun courant. Il en résulte que, en présence de la tension Ve délivrée par le réseau, l'onduleur 44 ne fournit aucun courant et qu'en conséquence la batterie 42 ne se décharge pas. En cas de disparition de la tension Ve délivrée par le réseau, c'est la tension V1 fournie par l'amplificateur 40 qui constitue la tension collecteur-émetteur du transistor 46 correspondant, de telle sorte que l'onduleur 44 alimente alors l'appareil connecté aux bornes 10, par l'intermédiaire du transformateur T1. Le thyristor 20 reste bloqué jusqu'à ce que la tension du réseau réapparaisse et que les tensions de pilotage délivrées par la carte de commande 48 soient à nouveau synchronisées avec la tension du réseau.

Les petites surtensions dans le réseau sont absorbées sans problème par le condensateur 52 et la batterie 42, tandis que les surtensions de plus longue durée se traduisent par le blocage du thyristor 20 et la disparition de la tension Ve du réseau.

Une micro-coupure du réseau, telle que celle représentée en 64 en figure 3, se traduit par la présence d'une impulsion de tension 66 sur un palier 62 de la tension V3. Le transistor correspondant 46 de l'onduleur est polarisé dans le sens direct par cette impulsion de tension alors que la tension V4 est appliquée à sa base, de sorte qu'il laisse passer du courant pendant la durée de la micro-coupure 64, dès le début de celle-ci. Les micro-coupures du réseau sont ainsi automatiquement et immédiatement compensées par l'onduleur.

Les déplacements des contacts mobiles 26 du commutateur 16 entre les plots de contact 30 sont assimilables à des micro-coupures du réseau, qui sont automatiquement compensées par l'onduleur 44. Le commutateur 16 peut donc fonctionner avec des relais bon marché qui n'ont pas à être extrêmement rapides.

Le transformateur T1 utilisé dans le dispositif selon l'invention peut bien entendu être un transformateur de type classique et comprendre un autre enroulement primaire connecté entre les bornes 10 de liaison à l'appareil à alimenter.

Le rendement du dispositif selon l'invention est élevé. Quand le réseau de distribution fonctionne normalement, l'onduleur ne consomme pas de courant et l'appareil est alimenté par le réseau. Quand le réseau de distribution est coupé, l'onduleur est alimenté par la batterie 42, par l'intermédiaire du transistor 40. Si celui-ci est commandé en linéaire, les pertes sont importantes, typiquement de l'ordre de 50%.

Si la puissance délivrée est faible (par exemple 500 VA), les pertes en fonctionnement sont de l'ordre de 250 VA, c'est-à-dire peu élevées, et cet inconvénient est largement compensé par la simplicité du circuit de commande du transistor 40.

Par contre, si la puissance délivrée est plus importante (par exemple 5000 VA), les pertes en fonctionnement sur batterie peuvent atteindre 2500 VA en raison de la commande linéaire du transistor 40, ce qui nécessiterait de surdimensionner largement la batterie, et de plus de prévoir des moyens de ventilation ou d'absorption de chaleur.

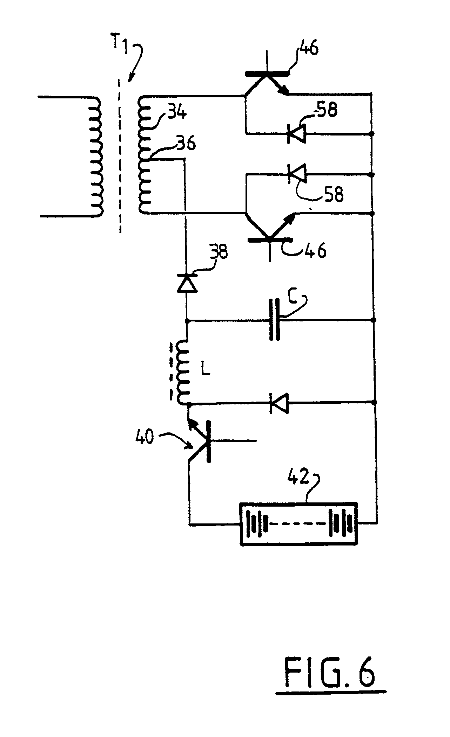

Dans ce cas, il est donc souhaitable d'utiliser le montage de la figure 6, dans lequel le transistor ou thyristor 40 constitue avec la batterie 42 et un circuit resonant L, C une alimentation à découpage.

Le transistor 40 est alors commandé en tout ou rien, pour être soit bloqué, soit conducteur. Le circuit L, C accordé sur la fréquence de commande du transistor ou thyristor 40, permet de reconstituer des arches de sinusoïde à partir des créneaux délivrés par le transistor ou thyristor 40. La technologie correspondante est bien connue de l'homme du métier et très largement répandue. Dans le cas présent, un de ses avantages essentiels est que cette alimentation à découpage ne peut transmettre de parasites dans le réseau de distribution et son environnement : en effet, lorsque le dispositif fonctionne sur la batterie, le réseau est déconnecté et, en présence du réseau, le dispositif ne consomme pas de courant.

Un autre avantage essentiel est que le rendement du dispositif atteint alors 90 % en fonctionnement sur la batterie. Les pertes sont très limitées, le dégagement de chaleur ne pose pas de problèmes, et il n'est pas nécessaire de surdimensionner les batteries. Il en résulte que le dispositif selon l'invention peut être conçu pour délivrer des puissances élevées, avec un encombrement deux fois à deux fois et demi plus faible que celui des dispositifs concurrents.

On peut également utiliser, à la place d'une alimentation à découpage, d'autres alimentations à rendement élevé, par exemple une alimentation à résonance, également bien connue de l'homme du métier et qui produit moins de signaux parasites que l'alimentation à découpage.

Le dispositif selon l'invention est également utilisable en triphasé (en étoile ou en triangle) : il suffit de prévoir un transformateur T1 et un dispositif sur chaque phase. Si une phase disparaît, seule la batterie associée à cette phase délivre du courant. Il y a donc une insensibilité du dispositif aux délestages de phase.

De façon générale, les avantages de l'invention sont les suivants :

– l'onduleur est branché en parallèle sur le réseau et sur l'appareil à alimenter,
– le rendement est très élevé,
– il n'y a pas de commutation onduleur-réseau,
– les courants de crête élevés requis au démarrage de l'appareil à alimenter sont fournis par le réseau,
– le dispositif ne comprend qu'un seul transformateur, ce qui permet une diminution du coût d'environ 30%,
– en fonctionnement normal du réseau de distribution électrique, l'onduleur fonctionne à vide et la batterie ne fournit pas de courant,
– le dispositif selon l'invention constitue un filtre actif (il absorbe les petites surtensions du réseau et compense les coupures et les micro-coupures du réseau),
– plusieurs dispositifs selon l'invention peuvent être montés en parallèle,
– selon les versions, le transformateur comprend un seul enroulement primaire (auto-transformateur) ou deux enroulements primaires (transformateur classique),
– la réduction du poids et du volume dûe à la suppression d'un transformateur est importante,
– la réduction de volume due au non-surdimensionnement des batteries est importante,
– le dispositif peut fournir des puissances élevées.

L'invention n'est nullement limitée aux modes de réalisation décrits et représentés, qui n'ont été donnés qu'à titre d'exemple. Elle comprend leurs équivalents techniques, notamment en ce qui concerne l'onduleur et son alimentation.

## Revendications

1- Procédé d'alimentation et de protection d'un appareil électronique, en particulier d'un appareil informatique, au moyen d'un onduleur (44) relié à un réseau de distribution électrique et à l'appareil pour lui fournir en cas de besoin une tension alternative régulée, caractérisé en ce qu'il consiste à connecter l'onduleur (44) en parallèle sur le réseau et sur l'appareil par l'intermédiaire d'un transformateur (T1), à alimenter l'onduleur par une tension (V3) qui est la somme d'une première tension alternative (V2) fournie par le transformateur à partir de la tension (Ve) du réseau et d'une seconde tension ondulée (V1) redressée qui est synchrone et en phase avec la tension du réseau et qui est fournie à partir d'une batterie (42) associée à l'onduleur (44), les arches de sinusoïde de ces deux tensions (V1, V2) ayant des amplitudes sensiblement égales en valeur absolue, et à piloter l'onduleur (44) par une tension synchrone et en phase avec celle du réseau de telle sorte qu'il ne fournit du courant qu'en l'absence de ladite première tension alternative (V2).

2- Procédé selon la revendication 1, caractérisé en ce qu'il consiste à comparer la tension (Ve) du réseau à deux tensions alternatives correspondant à des limites supérieure et inférieure acceptables de cette tension, et à couper l'alimentation de l'appareil par le réseau dès que la tension (Ve) fournie par ce dernier atteint l'une des limites précitées.

3- Procédé selon la revendication 2, caractérisé en ce que, quand la tension (Ve) du réseau est comprise entre lesdites limites, il consiste à réguler cette tension en réduisant ses variations par rapport à une valeur nominale, par commutation d'enroulements primaires additionnels (22, 24) sur le transformateur.

4- Procédé selon l'une des revendications précédentes, caractérisé en ce qu'il consiste à produire ladite tension (V1) au moyen d'un amplificateur (40) alimenté par la batterie (42) et piloté par une tension alternative redressée synchrone et en phase avec la tension (Ve) du réseau.

5- Procédé selon la revendication 4, caractérisé en ce qu'il consiste à piloter l'onduleur (44) et ledit amplificateur (40) à partir d'une même tension alternative synchrone et en phase avec celle du réseau.

6- Procédé selon une des revendications 1 à 3, caractérisé en ce qu'il consiste à produire ladite tension (V1) au moyen d'une alimentation à découpage constituée d'un amplificateur (40) alimenté par la batterie et associé à un circuit résonant (L,C).

7- Dispositif d'alimentation et de protection d'un appareil électronique, tel en particulier qu'un appareil informatique, ce dispositif comprenant un onduleur (44) connecté à un réseau de distribution électrique et à l'appareil, ainsi qu'une batterie (42), telle qu'un accumulateur électrochimique, caractérisé en ce que l'onduleur (44) est connecté en parallèle sur le réseau et sur l'appareil par l'intermédiaire d'un transformateur (T1) dont au moins un enroulement primaire (14) est relié au réseau et un enroulement secondaire (34) est relié à l'onduleur, des moyens de commande (48) étant prévus pour piloter l'onduleur par une tension ondulée synchrone et en phase avec la tension (Ve) du réseau et pour l'alimenter par la somme d'une première tension alternative (V2) fournie par l'enroulement secondaire (34) du transformateur à partir de la tension (Ve) du réseau et d'une seconde tension (V1) alternative redressée qui est fournie à partir de la batterie (42) et qui est synchrone et en phase avec la tension (Ve) du réseau, les amplitudes de ces deux tensions (V1, V2) étant sensiblement égales en valeur absolue, de telle sorte que l'onduleur ne fournit du courant qu'en l'absence de ladite première tension alternative (V2).

8- Dispositif selon la revendication 7, caractérisé en ce que l'onduleur (44) comprend un étage de puissance à transistors (46) du type "push-pull".

9- Dispositif selon la revendication 7 ou 8, caractérisé en ce que ladite seconde tension alternative redressée (V1) est appliquée-en un point milieu (36) de l'enroulement secondaire (34) du transformateur.

10- Dispositif selon l'une des revendications 7 à 9, caractérisé en ce que la batterie (42) est raccordée au point milieu de l'enroulement secondaire par un amplificateur (40) piloté par une tension alternative redressée synchrone et en phase avec celle du réseau.

11- Dispositif selon l'une des revendications 7 à 9, caractérisé en ce que la batterie est raccordée à l'onduleur par un circuit à découpage comprenant un amplificateur (40) fonctionnant en tout ou rien et associé à un circuit résonant (L, C).

12- Dispositif selon la revendication 10 ou 11, caractérisé en ce que l'amplificateur (40) est relié au point milieu (36) de l'enroulement secondaire (34), par un élément (38) à conduction unidirectionnelle, telle qu'une diode.

13- Dispositif selon l'une des revendications 7 à 12, caractérisé en ce que l'enroulement primaire du transformateur (T1) comprend des enroulements additionnels (22, 24) connectables en série au moyen d'un commutateur (16) commandé par comparaison de la tension du réseau à des valeurs prédéterminées.

14- Dispositif selon l'une des revendications 7 à 13, caractérisé en ce que le transformateur (T1) est un auto-transformateur et en ce que l'appareil à alimenter et le réseau sont connectés aux bornes dudit enroulement primaire (14) de ce transformateur.

15- Dispositif selon l'une des revendications 7 à 14, caractérisé en ce qu'il comprend un transformateur supplémentaire (T2) de faible puissance, dont l'enroulement primaire est connecté au réseau et dont l'enroulement secondaire fournit aux moyens de commande (48) précités une tension synchrone et en phase avec celle (Ve) du réseau.

FIG.1

FIG.2

FIG.3

FIG.4

FIG.5

FIG.6

Office européen
des brevets

**RAPPORT DE RECHERCHE EUROPEENNE**

Numero de la demande

EP   91 40 0378

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3348060 (ROBERT J. JAMIESON) <br> * colonne 2, lignes 30 - 52; figure 1 * | 1 | H02J9/06 |
| D,A | EP-A-237369 (SERRAS PAULET E.) <br> * page 4, ligne 16 - page 6, ligne 7; revendications 1-17; figures 1-5 * | 1, 4, 5, 7, 8 | |
| A | EP-A-200656 (SOCIETE GENERALE DE TRAVAUX ELECTRIQUES) <br> * page 3, dernier alinéa - page 4, alinéa 1; figures 1, 4 * | 1 | |
| A | FR-A-2556144 (LEVEILLE C.) <br> * le document en entier * | 1 | |
| A | EP-A-309124 (AMERICAN TELEPHONE AND TELEGRAPH COMPANY) <br> * le document en entier * | 1 | |
| A | US-A-3925772 (LOWELL E. MILLER) <br> * abrégé; figures 1, 2 * | 1 | **DOMAINES TECHNIQUES RECHERCHES (Int. Cl.5)** <br><br> H02J <br> G06F |

Le présent rapport a été établi pour toutes les revendications

| Lieu de la recherche | Date d'achèvement de la recherche | Examinateur |
|---|---|---|
| LA HAYE | 03 AVRIL 1991 | SCHOBERT D.A.V. |